# EUROPEAN PATENT SPECIFICATION

(11) **EP 1 340 325 B1**
(45) Date of publication and mention of the grant of the patent: **07.03.2007**
(21) Application number: 01983013.2
(22) Date of filing: 08.11.2001
(51) Int. Cl.: H04B 10/08, H04B 10/02

(54) **A SYSTEM AND A METHOD FOR LIMITING THE MAXIMUM OF LIGHT TRANSMITTED FROM A RIBBON FIBER**
SYSTEM UND VERFAHREN ZUR BEGRENZUNG DES MAXIMALEN AUS EINER BANDFASER GESENDETEN LICHTS
PROC D ET SYST ME DE LIMITATION MAXIMALE DE L' MISSION DE LUMI RE PAR UNE FIBRE EN RUBAN

(30) Priority: 15.11.2000 SE 0004183
(43) Date of publication of application: 03.09.2003
(73) Proprietor: TELEFONAKTIEBOLAGET LM ERICSSON (publ), 164 83 Stockholm (SE)
(72) Inventor: RENGMAN, Jacob, S-181 36 Lidingö (SE)
(74) Representative: Holmberg, Martin Tor
(86) International application number: PCT/SE2001/002475
(87) International publication number: WO 2002/041532

(56) References cited:
- EP-A1- 1 017 192
- EP-A2- 1 006 682
- EP-A2- 1 041 747
- DE-A1- 4 317 863
- US-A- 5 956 168

## Description

### TECHNICAL FIELD

This invention refers to a system and a method for controlling communication links and particularly for limiting light transmitted from a place of interruption in a ribbon fiber included in a communication link.

### STATE OF THE ART

Optical fibers can be interconnected side by side so as to form a ribbon fiber. Light intended for transmission in optical fibers and ribbon fibers is obtained from various optical transmitters such as diodes and, above all, lasers. Safety regulations include the stipulation that if a ribbon fiber is to be considered as being safe for the eyes, the total power of light transmitted from all fiber components included in the ribbon fiber must not exceed a predetermined value. However, this is only in the cases where measuring the light in the fibers can be carried out, for example when someone pulls apart two contacts between fibers or when a fiber in a ribbon fiber is cut off. Hence, it is permissible to use relatively high light power and thereby to drive lasers transmitting the light with relatively high power for normal communication if a detection mechanism is included for attenuating light in the fibers when an interruption occurs. This is called "Automatic Power Reduction" (APR). Systems for achieving this type of automatic reduction of the light power are known in the prior art for individual fibers, wherein thus when interruption occurs in the fiber the intensity of the light in the fiber is decreased so that it will lie below a predetermined limit value. An example can be found in EP1006682.
If present methods for automatically decreasing power are applied to ribbon fibers it would be possible for a plurality of interrupted fibers to exceed together the mentioned limit value for light transmitted from the ribbon fiber, as the power of light which is transmitted in different fibers is entirely individual. In addition the power consumption of associated electric circuits would be uneven and would cause a higher peak output and might possibly cause communication errors, at least if interruptions occur in all of the fibers simultaneously.

There are other solutions for reducing the laser emission in a ribbon fiber. For example, part of the bandwidth of the ribbon fiber can be utilized for transferring verifying information which shows whether the ribbon fiber is unbroken or not, whereafter the emission level is adjusted on the basis of known principles.

### DESCRIPTION OF THE INVENTION

An object of the present invention is to provide a system and a method for limiting the maximimum of light transmitted from a ribbon fiber at the occurrence of interruptions in the ribbon fiber.

A specific object of the invention is to provide a system and a method for preventing laser radiation dangerous to the eyes from being transmitted by an interrupted optical fiber included in a communication link having a plurality of fibers, such as a ribbon fiber, or from an extended, independent fiber contact associated with a communication link having a plurality of fibers.

These objects are achieved by the invention, the features and characteristics of which may be found in the accompanying claims.

Concurrently with these objects, retaining the instantaneous peak output at a low level is achieved. By means of the invention, lower instantaneous peak output and more even power consumption of the driving circuits are also achieved. Thereby the interruptions of surrounding equipment are also reduced for fulfilling the requirements of "Electro Magnetic Compatibility" EMC.

If a plurality of pairs of fibers in a fiber link or a ribbon fiber are subjected to interruptions, light is transmitted solely in one of the broken pairs of fibers at a time. This limits the total transmitted light intensity at the place of interruption, and hence the maximum permitted total light intensity of the entire ribbon fiber is not exceeded.

Generally speaking, a node or terminal is connected to a communication link comprising a plurality, N, of optical fibers divided into N/2 pairs of fibers. Each pair of fibers includes an incoming fiber and an outgoing fiber. For each incoming fiber of the communication link there is a receiver for receiving optical signals. For each outgoing fiber there is a transmitter for transmitting optical signals. The receiver converts the incoming optical light signals to electric signals. A detector emitting a status signal is connected to the receiver and indicates whether an optical signal is being received. For example, it can indicate whether the received optical signal has sufficient intensity or sufficient power, i.e. whether any one of these quantities exceeds a threshold value. The detector is in turn connected to a control unit which determines if transmission of light is permitted or not on the outgoing fiber which is included in the pair of fibers. The control unit is in turn connected to the transmitter which is connected to the outgoing fiber in the pair of fibers. The transmitter converts the outgoing electric signals to optical signals for transmission on the outgoing fiber which is connected to the transmitter. Hence, in the normal case, there are equally many receivers, detectors, control units and transmitters as the number of pairs of fibers in the ribbon fiber, although this is not always necessary. A channel selector unit controlled by a clock signal from a clock generator is connected to the control units to ensure that the transmission is carried out on appropriate outgoing fibers.

The advantage of the system and the method in accordance with the invention is that by means thereof, the maximum amount of light transmitted from a ribbon fiber, when an interruption occurs in the ribbon fiber, is limited so as to prevent laser radiation dangerous to the eyes from being transmitted from an interrupted optical fiber included in a communication link having a plurality of fibers or from an extended, independent fiber contact associated with such communication link. Furthermore, the instantaneous peak power is retained at a low level and lower instantaneous peak power and more even power consumption of the driving circuits are achieved so that i.a. the interference of the surrounding equipment by said circuits is reduced.

### DESCRIPTION OF THE FIGURES

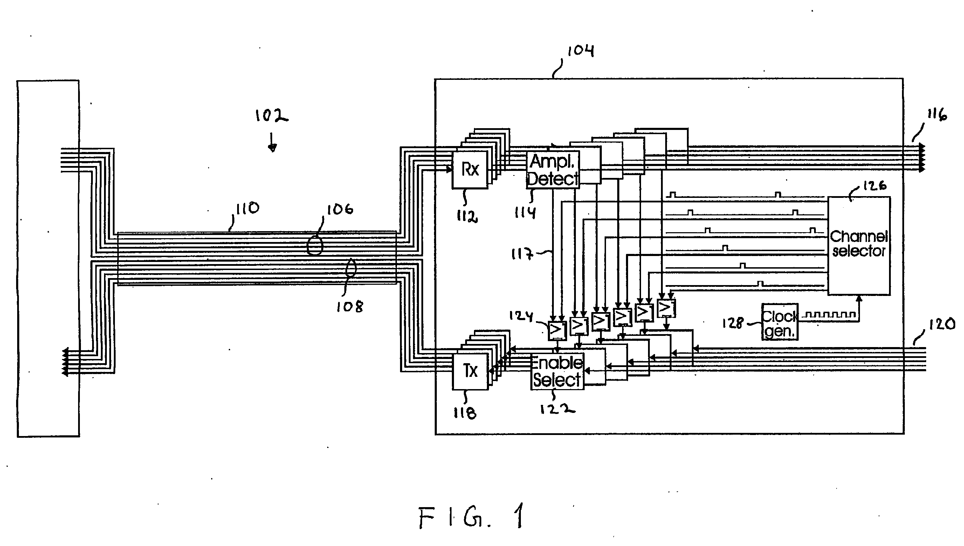

The invention will now be described as a non-limiting embodiment in connection with the accompanying drawing in which Figure 1 is a schematic view of a communication system comprising terminals which contain devices for limiting the total intensity of light which is propagated in a ribbon fiber.

### PREFERRED EMBODIMENT

Figure 1 shows a fiber-optical communication system which comprises communication links 102 between terminals 104. Each communication link 102 comprises a plurality of optical fibers which for a relevant terminal 104 connected to the link are subdivided into incoming fibers 106 and outgoing fibers 108, whereby pairs of optical fibers are obtained, with one incoming fiber and one outgoing fiber in each pair. The optical fibers 106, 108 in a link 102 may to advantage be included in a ribbon fiber 110. Terminal 104 receives signals or information and transmits signals or information to other terminals in the communication system via the optical fibers 106, 108 that are included in the ribbon fiber 110. Communication link 102 can generally comprise N individual optical fibers, wherein N is an even integer. For example, for a link 102 with 12 individual optical fibers, one ribbon fiber with 12 fibers or two ribbon fibers each with six fibers may be used. In this case there are six pairs of fibers.

Each terminal 104 comprises optical receivers or optoelectrical converters 112, for example PIN diodes, connected to the incoming fibers 106 in link 102 for receiving light containing information transmitted on the respective incoming fibers. The electric signals which are delivered by receivers 104 are decoded in amplifying and detecting units 114, from which the received information is delivered as electric signals on output lines 116. Each terminal 104 also comprises optical transmitters or optoelectrical converters 118 connected to the outgoing fibers 108 in link 102 for transmitting light containing information in the respective fibers. Transmitters 118 may to advantage comprise semiconductor lasers. The transmitters receive electrical signals from input lines 120 via control units 122 which carry out control of when signals may be sent from the terminal. The amplifying and detecting devices 114 deliver control signals on lines 117 which are connected to the inputs of OR gates 124, the outputs of which are connected to a corresponding control unit 122. The OR gates 124 receive a second input signal from a channel selector unit 126 which in turn is controlled by a clock signal from a clock circuit 128.

The function of terminal 104 in normal transmission and reception is as follows. In normal function, optical signals which under ordinary circumstances contain digital information are received on the incoming fibers 106 in ribbon fiber 110. The signals in such fiber are received in the receiver 112 which is connected to this fiber. In this receiver the incoming signals are converted to electrical signals. These electrical signals are then transmitted further to a corresponding one of the amplifying and detecting units 114, which unit is individually associated with this receiver, and hence there are equally many signal dectectors 114 and receivers 112. The amplifying and detecting unit 114 amplifies and senses the electrical signals and transmits the information carrying portion which contains the digital information from the incoming fiber further on to one of the output lines 116. The amplifying and detecting unit also senses whether any signal at all is fed from the corresponding receiver 112 to the unit and hence whether any optical signal is received by the receiver 112. The sensing can for example be carried out by the amplifying and detecting unit sensing the average level of their electrical input signals and comparing this level to a predetermined threshold value. Alternatively, this type of sensing can be carried out directly by the receivers 112. On its output line 117 amplifier/detector 114 delivers a signal, which indicates the sensing result and which can be designated as "Loss of signal" or "Signal detected", to a corresponding one of the OR gates 124. The sensing signal on lines 117 is here considered to have a high logic level when an optical input signal exists and a low logic level in all other cases. Thus, when optical signals are received by a receiver 112 a high signal is fed to the corresponding control unit 122 which then passes the electricalal signals from the corresponding incoming electric line 120 to the respective transmitter 118. Hence, when an input signal exists on an incoming fiber 106, an optical signal is transmitted on the outgoing fiber 108 which is included in a pair with the relevant incoming fiber.

In general, three different cases can be found:
1. (The normal case described above.) There are incoming signals in communication link 102. Normal transmission of optical signals occurs from terminal 104.
2. One or more fibers in link 102 are interrupted, or the incoming light on at least one fiber has too low intensity or power.
3. Initiation of communication in one, several or all pairs of fibers in ribbon fiber 110 in link 102 is desired.

Thus, Case 2 occurs when a fiber contact has been pulled out or a fiber in a pair of fibers has a deficiency or has broken apart or when transmitting equipment connected to the opposite end of ribbon fiber 110 is disconnected. Receiver 112 then does not detect light on incoming fiber 106 which is connected to the receiver. Light is not to be transmitted on the corresponding outgoing fiber 108. The purpose of this is to protect installers and other users of the system from eye injuries which can arise because of the intense radiation which may be sent out at a fiber end, particularly when the fiber is supplied with light from a laser at its other end. Hence, in general in this case, no transmission of optical signals is to occur on the outgoing fibers 108 from terminal 104, for which fibers 108 the fibers 106 included in the same pair do not transfer an optical signal.

Case 3 occurs when a receiver 112 is in state of alert and is waiting for a light signal to arrive. Terminal 104 can then periodically determine whether the pair of fibers, to which incoming fiber the receiver 112 is connected, is in operation again for signal transmission. The transmitter 118 which is connected to the outgoing fiber in the same pair of fibers can then during a short, periodically recurring period of time, transmit a light signal although receiver 112 associated with the same pair of fibers does not detect light on the incoming fiber. However, this is to be permitted solely for one pair of fibers at a time, on the one hand so that a too sudden power increase in terminal 104 does not occur, which might disturb the function of the terminal, for example induce disturbances in the supply voltage for a driving circuit card and thereby disturb the communication on pairs of fibers which already are functioning, and on the other hand to limit the light intensity in any possibly broken-off fibers. If even brief transmission is initiated concurrently on a plurality of outgoing fibers, on which no signal has been transmitted earlier, the emitted light intensity may namely be altogether too high, counted on the interrupted fibers. Hence, generally speaking, transmission in this case is to be carried out intermittently or recurring periodically on the outgoing fibers 108 which are included in pairs of fibers in which the incoming fiber 106 does not have a signal. In the intermittent transmission it should be ensured that transmission does not occur simultaneously in a plurality of relevant outgoing fibers but solely in one at a time. The transmission is to be carried out with so low power that light having an intensity injurious to the eyes cannot be transmitted from broken-off fiber ends.

These cases can be handled by means of the output signals of channel selector 126 and OR gates 124, respectively. The channel selector is controlled by the clock signal from clock generator 128 and delivers on its output lines, which in number are equal to the number of pairs of fibers in link 102, pulses for successively and cyclicly activating the control circuits 122.

Because of the OR circuits 124 this activation only occurs for those fibers included in pairs of fibers of which the incoming fiber 106 does not carry an optical signal. If the number of fibers in link 102 is N, there will be N/2 pairs of fibers, and the transmitter 118, which belongs to such inactive pair of fibers, can then be active during not more than 1/(N/2) of the total time on the average. However, this generally results in altogether too high average power for each transmitter and on each outgoing fiber, and therefore the activating pulses are to advantage positioned separate from each other as is indicated in Figure 1. If the control pulses are designed with intermittent spacing, each transmitter will be active during a shorter period on the average. Generally speaking, the average power is generally speaking determined by both the length and the frequency of the activating pulses. The successive transmission during short periods of time shows up as a pulse width modulation of the average output power level for each transmitter 118 and thereby lowers the average power so that it will amount to not more than a minor portion of the normal power of the transmitter.

The activating portions of the selector signals and thereby the active portions of the transmitters 118 must be of such duration that a receiver 112 and an amplifier/detector 114 in a second terminal connected to the opposite end of fiber link 102 will have time to detect that there is an incoming signal. After such detection having been carried out, a transmitter associated with the same pair of fibers in the second terminal begins to transmit, in its turn, optical signals so that the amplifier/detector 114 in the first terminal 104 has time to detect that there now is an incoming signal. If this entire procedure is carried out sufficiently slowly, a functioning communication over an earlier inactive pair of fibers can be established. The activating portions will therefore have to be of a length which is twice the length of the time constant for detection, which is generally applicable in the link for communication over a pair of fibers.

Terminal 104 does not have to have the same number of receivers 112 and amplifiers/detectors 114 as control units 122 and transmitters 118. What is significant is that when a loss of optical power is detected on an incoming fiber, the power in transmission on at least two fibers must be reduced, wherein this reduction must be made in time division, for example for at least a number of outgoing fibers equal to the number of incoming fibers for which power loss has been detected.

An alternative fiber optical communication system comprising communication links 102 between terminal 104 and a plurality of other terminals. Each communication link comprises a plurality of optical fibers, which for the relevant terminal 104 connected to the link are subdivided into incoming fibers 106 and outgoing fibers 108, whereby pairs of optical fibers are obtained, with an incoming fiber and an outgoing fiber in each pair. Each one of said other terminals is connected to at least one of these pairs of fibers. Terminal 104 receives signals or information and transmits signals or information to the other terminals in the communication system.

## Claims

1. A terminal (104) for being connected to a communication link (102) comprising a plurality (N) of individual optical fibers comprising incoming fibers (106) and at least two outgoing fibers (108), with the incoming fibers being intended for transmitting light, which carries optical signals, to the terminal and the outgoing fibers being intended for transmission of light, which carries optical signals, from the terminal, **characterized by** detecting devices (114) connected to the incoming fibers for detecting whether light with an intensity or a power greater than or equal to a predetermined threshold level is transferred on the incoming fibers, and a control device (122, 124, 126) connected to the detecting devices for receiving detection signals and being connected to the outgoing fibers for permitting solely periodic transmission of light on each one of at least two of the outgoing fibers when at least one of the detection signals indicates that light with an intensity or power lower than the threshold level is being transferred on one of the incoming fibers, wherein, when the periodic transfer of light on said at least two of the outgoing fibers occurs, said light is transferred on solely one of these at each time.

2. A terminal in accordance with Claim 1, **characterized by** receivers (112), each one being connected to an individual fiber of the incoming fibers and an associated one of the detecting devices for converting transferred light to electrical signals which are delivered to the associated detecting device, with the detecting devices being adapted to produce from the electrical signals on the one hand information-carrying electrical signals which are delivered on an outgoing electric line (116), and on the other hand said detection signal.

3. A terminal in accordance with Claim 1, **characterized by** transmitters (118), each one of which is connected to an individual fiber among the outgoing fibers, to the control device and to a line (120) for incoming electrical information-carrying signals for converting the latter to optical signals and for transmitting them on the outgoing fiber.

4. A terminal in accordance with Claim 1, **characterized in that** the control device comprises a control unit (122) for each outgoing fiber and a channel selector unit (126) connected to the control units for selecting the one of said at least two outgoing fibers on which light is to be transferred.

5. A terminal in accordance with Claim 4, **characterized in that** the channel selector unit is adapted to generate the selector signals, one selector signal for each outgoing fiber to be delivered to the control unit for said outgoing fiber.

6. A terminal in accordance with Claim 5, **characterized in that** each selector signal comprises periodically repeated portions which indicate that transfer is permitted and which are separated in time from corresponding portions of the other selector signals, and that between said portions there exist time periods which indicate that transfer is not permitted in the case that light with an intensity or power lower than the threshold value is not transferred on a corresponding incoming fiber.

7. A terminal in accordance with Claim 4, **characterized in that** the channel selector unit is connected to the control units by means of gates in such manner that each gate as its input signals receives, on the one hand a selector signal generated by the channel selector unit and on the other hand the detection signal from one of the detector units, and as an output signal delivers a control signal to one of the control units.

8. A terminal in accordance with Claim 1 for being connected to a communication link comprising equally many (N/2) incoming fibers (106) and outgoing fibers (108) for forming equally many pairs of fibers, wherein each pair of fibers includes an incoming fiber and an outgoing fiber and wherein each fiber only includes a single pair of fibers, **characterized in that** the control device comprises a control unit (122) for each outgoing fiber and **in that** the detection signal from each one of the detecting devices is delivered to the control unit and to the outgoing fiber which is included in the same pair as the incoming fiber to which the detecting device is connected.

9. A method for limiting light transferred in outgoing fibers at an interruption in any incoming fiber included in a communication link (102) connected to a terminal (104), said communication link comprising a plurality (N) of individual optical fibers, including incoming fibers (106) and at least two outgoing fibers (108), wherein light, carrying optical signals, is transferred on the incoming fibers to the terminal, and wherein light, carrying optical signals, is transferred to the outgoing fibers from the terminal, **characterized by** the steps of:
- detecting whether light of intensity or power greater than or equal to a predetermined threshold level is transferred to the incoming fibers, and
- controlling the transfer of light on the outgoing fibers depending on the result of the detection, so that light is solely periodically transferred on each one of at least two of the outgoing fibers when the result of the detection indicates that light, having an intensity or power lower than the threshold value, is transferred on one of the incoming fibers and so that, in the periodic transfer of light on the at least two of the outgoing fibers, light is transferred on solely one of these at each time.

10. A method in accordance with Claim 9, **characterized by** the additional step of converting light transferred on each one of the incoming fibers to electrical signals, wherein in the step of detecting the detection is carried out by producing, from the electrical signals, on the one hand information-carrying electrical signals for being supplied to an electric line (116) outgoing from the terminal, and on the other hand a detection signal which indicates whether light having an intensity or power lower than the threshold value is transferred on the incoming fiber.

11. A method in accordance with Claim 9, **characterized by** the additional step of converting electrical information-carrying signals, incoming to the terminal, into light for transfer on the outgoing fibers.

12. A method in accordance with Claim 9, **characterized in that** in the step of controlling, selector signals are generated for selecting the one of said two at least outgoing fibers on which light is to be transferred.

13. A method in accordance with Claim 12, **characterized in that** in the generating of the selector signals one selector signal is generated for each outgoing fiber, whereby each selector signal contains periodically repeated portions which indicate that transfer is permitted and which are separated in time from corresponding portions of the other selector signals, and that between the portions there are time periods which indicate that transfer is not permitted in the case of light having an intensity or power lower than the threshold level is not transferred on a corresponding incoming fiber.

14. A method in accordance with Claim 12, **characterized in that** the selector signals are combined with detection signals disclosing the result of the detection for producing a combined control signal which controls transfer of light on the outgoing fibers.

15. A method in accordance with Claim 9, when the communication link comprises equally many (N/2) incoming fibers (106) as outgoing fibers (108) for forming equally many pairs of fibers, whereby each pair of fibers includes an incoming fiber and an outgoing fiber and each fiber is included in solely one pair of fibers, **characterized in that** in the step of detecting there is generated a detection signal for each incoming fiber, which indicates the result of the detection, and that in the step of controlling, the detection signals are used for controlling the transfer of light on the outgoing fibers in such manner that each one of the detection signals controls transfer on the outgoing fiber which is included in the same pair as the incoming fiber to which the detecting device is connected.

## Patentansprüche

1. Endgerät (104) zum Verbinden mit einer Kommunikationsverbindung (102), die eine Vielzahl (N) individueller optischer Fasern umfasst, die eingehende Fasern (106) und wenigstens zwei abgehende Fasern (108) umfassen, wobei die eingehenden Fasern zum Übertragen von Licht, das optische Signale trägt, an das Endgerät beabsichtigt sind, und die abgehenden Fasern zur Übertragung von Licht, das optische Signale trägt, von dem Endgerät beabsichtigt sind, **gekennzeichnet durch** Erfassungsvorrichtungen (114), die mit den eingehenden Fasern verbunden sind, zum Erfassen, ob Licht mit einer Intensität oder einer Leistung größer als oder gleich einem vorbestimmten Schwellenpegel auf den eingehenden Fasern transferiert wird, und eine Steuervorrichtung (122, 124, 126), die mit den Erfassungsvorrichtungen verbunden ist, zum Empfangen von Erfassungssignalen und verbunden mit den abgehenden Fasern zum Zulasssen einer ausschließlich periodischen Übertragung von Licht auf jeder der wenigstens zwei abgehenden Fasern, wenn wenigstens eines der Erfassungssignale angibt, dass Licht mit einer Intensität oder Leistung niedriger als der Schwellenpegel auf einer der eingehenden Fasern transferiert wird, wobei, wenn der periodische Transfer von Licht auf wenigstens einer der zwei abgehenden Fasern auftritt, das Licht auf ausschließlich einer dieser zu jeder Zeit transferiert wird.

2. Endgerät gemäß Anspruch 1, **gekennzeichnet durch** Empfänger (112), von denen jeder mit einer individuellen Faser der eingehenden Fasern und einer verknüpften einen der Erfassungsvorrichtungen zum Umwandeln von transferiertem Licht in elektrische Signale verbunden ist, die an die verknüpfte Erfassungsvorrichtung geliefert werden, wobei die Erfassungsvorrichtungen ausgebildet sind zum Produzieren, aus den elektrischen Signalen, von einerseits informationstragenden elektrischen Signalen, die an eine abgehende elektrische Leitung (116) geliefert werden, und von andererseits dem Erfassungssignal.

3. Endgerät gemäß Anspruch 1 **gekennzeichnet durch** Übertrager (118), von denen jeder mit einer individuellen Faser unter den abgehenden Fasern mit der Steuervorrichtung und mit einer Leitung für eingehende elektrische informationstragende Signale zum Umwandeln der Letzteren in optische Signale und zum Übertragen derer an die abgehende Faser verbunden ist.

4. Endgerät gemäß Anspruch 1, **dadurch gekennzeichnet, dass** die Steuervorrichtung eine Steuereinheit (122) für jede abgehende Faser und eine Kanalauswählereinheit (126) umfasst, die mit den Steuereinheiten verbunden ist zum Auswählen der einen von den wenigstens zwei abgehenden Fasern, auf der Licht transferiert werden soll.

5. Endgerät gemäß Anspruch 4, **dadurch gekennzeichnet, dass** die Kanalauswählereinheit ausgebildet ist zum Erzeugen der Auswählersignale, mit einem Auswählersignal für jede abgehende Faser, an die Steuereinheit für die abgehende Faser zu liefern.

6. Endgerät gemäß Anspruch 5, **dadurch gekennzeichnet, dass** jedes Auswählersignal periodisch wiederholte Teilstücke umfasst, die angeben, dass ein Transfer zugelassen wird, und die zeitlich von entsprechenden Teilstücken der anderen Auswählersignale getrennt sind, und dass zwischen den Teilstücken Zeitperioden existieren, die angeben, dass ein Transfer nicht zugelassen wird, in dem Fall, dass Licht mit einer Intensität oder Leistung geringer als dem Schwellenwert nicht auf einer entsprechenden eingehenden Faser transferiert wird.

7. Endgerät gemäß Anspruch 4, **dadurch gekennzeichnet, dass** die Auswählereinheit mit den Steuereinheiten mittels Gattern auf solch eine Weise verbunden ist, dass jedes Gatter als seine Eingangssignale einerseits ein durch die Kanalauswählereinheit erzeugtes Auswählersignal und andererseits das Erfassungssignal von einer der Detektoreinheiten empfängt, und als ein Ausgangssignal ein Steuersignal an eine der Steuereinheiten liefert.

8. Endgerät gemäß Anspruch 1 zum Verbinden mit einer Kommunikationsverbindung, die gleich viele (N/2) eingehende Fasern (106) und abgehende Fasern (108) zum Bilden gleich vieler Faserpaare umfasst, wobei jedes Faserpaar eine eingehende Faser und eine abgehende Faser enthält und wobei jede Faser nur ein einzelnes Faserpaar enthält, **dadurch gekennzeichnet, dass** die Steuervorrichtung eine Steuereinheit (122) für jede abgehende Faser umfasst, und dass das Erfassungssignal von jeder einen der Erfassungsvorrichtungen an die Steuereinheit und an die abgehende Faser geliefert wird, die in demselben Paar wie die eingehende Faser enthalten ist, mit der die Erfassungsvorrichtung verbunden ist.

9. Verfahren zum Begrenzen von in eingehenden Fasern transferiertem Licht bei einer Begrenzung in irgendeiner eingehenden Faser, die in einer Kommunikationsverbindung (102) enthalten ist, die mit einem Endgerät (104) verbunden ist, wobei die Kommunikationsverbindung eine Vielzahl (N) individueller optischer Fasern umfasst, mit eingehenden Fasern (106) und wenigstens zwei abgehenden Fasern (108), wobei optische Signale tragendes Licht auf den eingehenden Fasern an das Endgerät transferiert wird, und wobei optische Signale tragendes Licht an die abgehenden Fasern von dem Endgerät transferiert wird, **gekennzeichnet durch** die Schritte zum:
- Erfassen, ob Licht einer Intensität oder Leistung größer als oder gleich einem vorbestimmten Schwellenpegel an die eingehenden Fasern transferiert wird, und
- Steuern des Lichttransfers auf den abgehenden Fasern in Abhängigkeit von dem Ergebnis der Erfassung, so dass das Licht ausschließlich periodisch transferiert wird auf jeder der wenigstens zwei abgehenden Fasern, wenn das Ergebnis der Bestimmung angibt, dass Licht, mit einer Intensität oder Leistung geringer als dem Schwellenwert, auf einer der eingehenden Fasern transferiert wird, und so dass, in dem periodischen Transfer von Licht auf den wenigstens zwei der abgehenden Fasern, Licht ausschließlich auf einer von diesen zu jeder Zeit transferiert wird.

10. Verfahren gemäß Anspruch 9, **gekennzeichnet durch** den zusätzlichen Schritt zum Umwandeln von auf jeder der eingehenden Fasern transferiertem Licht in elektrische Signale, wobei in dem Schritt zum Erfassen die Erfassung ausgeführt wird **durch** Produzieren, aus den elektrischen Signalen, von einerseits informationstragenden elektrischen Signalen zum Liefern an eine elektrische Leitung (116), die von dem Endgerät abgeht, und von andererseits einem Erfassungssignal, das angibt, ob Licht mit einer Intensität oder Leistung geringer als dem Schwellenwert auf der eingehenden Faser transferiert wird.

11. Verfahren gemäß Anspruch 9, **gekennzeichnet durch** den zusätzlichen Schritt zum Umwandeln elektrischer informationstragender Signale, die an dem Endgerät eingehen, in Licht zum Transfer auf den abgehenden Fasern.

12. Verfahren gemäß Anspruch 9, **dadurch gekennzeichnet, dass** in dem Schritt zum Steuern Auswählersignale erzeugt werden zum Auswählen der einen von den wenigstens zwei abgehenden Fasern, auf denen Licht transferiert werden soll.

13. Verfahren gemäß Anspruch 12, **dadurch gekennzeichnet, dass** beim Erzeugen der Auswählersignale ein Auswählersignal für jede abgehende Faser erzeugt wird, wodurch jedes Auswählersignal periodisch erzeugte Teilstücke enthält, die angeben, dass ein Transfer zugelassen wird, und die zeitlich von entsprechenden Teilstücken der anderen Auswählersignale getrennt sind, und dass zwischen den Teilstücken es Zeitperioden gibt, die angeben, dass ein Transfer nicht zugelassen wird, in dem Fall, dass Licht mit einer Intensität oder Leistung geringer als dem Schwellenpegel nicht auf einer entsprechenden eingehenden Faser transferiert wird.

14. Verfahren gemäß Anspruch 12, **dadurch gekennzeichnet, dass** die Auswählersignale mit das Ergebnis der Erfassung offenbarenden Erfassungssignalen zusammengefasst werden zum Produzieren eines zusammengefassten Steuersignals, das den Lichttransfer an die abgehenden Fasern steuert.

15. Verfahren gemäß Anspruch 9, wobei die Kommunikationsverbindung gleich viele (N/2) eingehende Fasern (106) wie abgehende Fasern (108) umfasst zum Bilden gleich vieler Faserpaare, wobei jedes Faserpaar eine eingehende Faser und eine abgehende Faser enthält und jede Faser in ausschließlich einem Faserpaar enthalten ist, **dadurch gekennzeichnet, dass** in dem Schritt zum Erfassen ein Erfassungssignal für jede eingehende Faser erzeugt wird, das das Ergebnis der Erfassung angibt, und dass in dem Schritt zum Steuern die Erfassungssignale verwendet werden zum Steuern des Transfers von Licht auf den abgehenden Fasern auf solch eine Weise, dass jedes der Erfassungssignale den Transfer auf der abgehenden Faser steuert, die in demselben Paar wie die eingehende Faser enthalten ist, mit der die Erfassungsvorrichtung verbunden ist.

## Revendications

1. Terminal (104), destiné à être connecté à une liaison de communication (102) comprenant une pluralité (N) de fibres optiques individuelles comprenant des fibres entrantes (106) et au moins deux fibres sortantes (108), les fibres entrantes étant destinées à transmettre de la lumière qui transporte des signaux optiques vers le terminal et les fibres sortantes étant destinées à transmettre de la lumière qui transporte des signaux optiques à partir du terminal, **caractérisé par** des dispositifs de détection (114) connectés aux fibres entrantes afin de détecter si de la lumière ayant une intensité ou une puissance supérieure ou égale à un niveau de seuil prédéterminé est transférée sur les fibres entrantes et un dispositif de commande (122, 124, 126) connecté aux dispositifs de détection afin de recevoir des signaux de détection et connecté aux fibres sortantes afin de ne permettre la transmission périodique de lumière sur chacune desdites au moins deux fibres sortantes que lorsqu'au moins un des signaux de détection indique que de la lumière possédant une intensité ou une puissance inférieure au niveau de seuil est transférée sur l'une des fibres entrantes, dans lequel, lorsque le transfert périodique de lumière se produit sur lesdites au moins deux fibres sortantes, ladite lumière n'est transférée que sur une seule d'entre elles à chaque fois.

2. Terminal selon la revendication 1, **caractérisé par** des récepteurs (112), chacun étant connecté à une fibre individuelle parmi les fibres entrantes et à un dispositif associé parmi les dispositifs de détection, afin de convertir la lumière transférée en signaux électriques qui sont fournis au dispositif de détection associé, les dispositifs de détection étant conçus pour produire, à partir des signaux électriques, d'une part des signaux électriques transportant de l'information qui sont fournis à une ligne électrique sortante (116) et d'autre part ledit signal de détection.

3. Terminal selon la revendication 1, **caractérisé par** des émetteurs (118), chacun étant connecté à une fibre individuelle parmi les fibres sortantes, au dispositif de commande et à une ligne (120) de signaux électriques entrants transportant de l'information, afin de convertir ces derniers en signaux optiques et de les transmettre sur la fibre sortante.

4. Terminal selon la revendication 1, **caractérisé en ce que** le dispositif de commande comprend une unité de commande (122) pour chaque fibre sortante et une unité de sélection de canal (126) connectée aux unités de commande afin de sélectionner l'une desdites au moins deux fibres sortantes sur laquelle de la lumière doit être transférée.

5. Terminal selon la revendication 4, **caractérisé en ce que** l'unité de sélection de canal est conçue pour produire les signaux de sélection, un signal de sélection pour chaque fibre sortante étant fourni à l'unité de commande pour ladite fibre sortante.

6. Terminal selon la revendication 5, **caractérisé en ce que** chaque signal de sélection comprend des portions se répétant périodiquement qui indiquent que le transfert est autorisé et qui sont séparées dans le temps de portions correspondantes des autres signaux de sélection, et **en ce que**, entre lesdites portions, il existe des périodes de temps qui indiquent que le transfert n'est pas autorisé lorsqu'une lumière possédant une intensité ou une puissance inférieure à la valeur de seuil n'est pas transférée sur une fibre entrante correspondante.

7. Terminal selon la revendication 4, **caractérisé en ce que** l'unité de sélection de canal est connectée aux unités de commande à l'aide de portes, de telle manière que chaque porte reçoit, comme signaux d'entrée, d'une part un signal de sélection produit par l'unité de sélection de canal et d'autre part le signal de détection provenant de l'une des unités de détection, et fournit comme signal de sortie un signal de commande destiné à l'une des unités de commande.

8. Terminal selon la revendication 1, destiné à être connecté à une liaison de communication comprenant un nombre égal (N/2) de fibres entrantes (106) et de fibres sortantes (108) afin de former un nombre égal de paires de fibres, dans lequel chaque paire de fibres comprend une fibre entrante et une fibre sortante, et dans lequel chaque fibre n'inclut qu'une seule paire de fibres, **caractérisé en ce que** le dispositif de commande comprend une unité de commande (122) pour chaque fibre sortante, et **en ce que** le signal de détection de chacun des dispositifs de détection est fourni à l'unité de commande et à la fibre sortante qui est incluse dans la même paire que la fibre entrante à laquelle est connecté le dispositif de détection.

9. Procédé de limitation de la lumière transférée dans des fibres sortantes, au point d'interruption d'une fibre entrante quelconque incluse dans une liaison de communication (102) connectée à un terminal (104), ladite liaison de communication comprenant une pluralité (N) de fibres optiques individuelles, y compris des fibres entrantes (106) et au moins deux fibres sortantes (108), dans lequel de la lumière transportant des signaux optiques est transférée sur les fibres entrantes vers le terminal, et dans lequel de la lumière, transportant des signaux optiques, est transférée vers les fibres sortantes à partir du terminal, **caractérisé par** les étapes consistant à :
détecter si de la lumière ayant une intensité ou une puissance supérieure ou égale à un niveau de seuil prédéterminé est transférée sur les fibres entrantes, et
commander le transfert de lumière sur les fibres sortantes en fonction du résultat de la détection, si bien que de la lumière n'est transférée périodiquement sur chacune desdites au moins deux fibres sortantes que lorsque le résultat de la détection indique que de la lumière possédant une intensité ou une puissance inférieure à la valeur de seuil est transférée sur l'une des fibres entrantes et si bien que, dans le transfert périodique de lumière sur lesdites au moins deux fibres sortantes, ladite lumière n'est transférée que sur une seule de celles-ci à chaque fois.

10. Procédé selon la revendication 9, **caractérisé par** l'étape additionnelle consistant à convertir de la lumière transférée sur chacune des fibres entrantes en signaux électriques, dans lequel, dans l'étape de détection, la détection est réalisée en produisant, à partir des signaux électriques, d'une part des signaux électriques transportant de l'information qui sont fournis à une ligne électrique (116) qui sort du terminal et d'autre part un signal de détection qui indique si de la lumière possédant une intensité ou une puissance inférieure à la valeur de seuil est transférée sur la fibre entrante.

11. Procédé selon la revendication 9, **caractérisé par** l'étape additionnelle consistant à convertir des signaux électriques transportant de l'information qui arrivent en entrée sur le terminal en de la lumière à transférer sur les fibres sortantes.

12. Procédé selon la revendication 9, **caractérisé en ce que**, dans l'étape de commande, des signaux de sélection sont produits afin de sélectionner celle desdites au moins deux fibres sortantes sur laquelle doit être transférée de la lumière.

13. Procédé selon la revendication 12, **caractérisé en ce que**, dans la production des signaux de sélection, un signal de sélection est produit pour chaque fibre sortante, si bien que chaque signal de sélection comprend des portions se répétant périodiquement qui indiquent que le transfert est autorisé et qui sont séparées dans le temps de portions correspondantes des autres signaux de sélection, et **en ce que**, entre lesdites portions, il existe des périodes de temps qui indiquent que le transfert n'est pas autorisé lorsqu'une lumière possédant une intensité ou une puissance inférieure au niveau de seuil n'est pas transférée sur une fibre entrante correspondante.

14. Procédé selon la revendication 12, **caractérisé en ce que** les signaux de sélection sont combinés avec des signaux de détection indiquant le résultat de la détection afin de produire un signal de commande combiné qui commande le transfert de lumière sur les fibres sortantes.

15. Procédé selon la revendication 9, dans lequel la liaison de communication comprend un nombre égal (N/2) de fibres entrantes (106) et de fibres sortantes (108) afin de former un nombre égal de paires de fibres, dans lequel chaque paire de fibres comprend une fibre entrante et une fibre sortante, et dans lequel chaque fibre n'est incluse que dans une seule paire de fibres, **caractérisé en ce que**, dans l'étape de détection, il est produit un signal de détection pour chaque fibre entrante, qui indique le résultat de la détection, et **en ce que**, dans l'étape de commande, les signaux de détection sont utilisés pour commander le transfert de lumière sur les fibres sortantes, de telle manière que chacun des signaux de détection commande le transfert sur la fibre sortante qui est incluse dans la même paire que la fibre entrante à laquelle est connecté le dispositif de détection.
